# FASCICULE DE BREVET EUROPEEN

(11) **EP 3 411 220 B1**
(45) Date de publication et mention de la délivrance du brevet: **14.07.2021**
(21) Numéro de dépôt: 17703460.0
(22) Date de dépôt: 23.01.2017
(51) Int. Cl.: B29C 70/56, B29C 70/38, B29B 11/16

(54) **PROCÉDÉ DE RÉALISATION DE PRÉFORMES TRIDIMENSIONNELLES PAR FORMAGE DE PRÉFORMES INITIALES MISES SOUS TENSION**
VERFAHREN ZUR HERSTELLUNG VON DREIDIMENSIONALEN VORFORMEN MITTELS FORMEN VON GESPANNTEN VORFORMEN
METHOD FOR PRODUCING THREE DIMENSIONAL PREFORMS BY FORMING TENSIONED PREFORMS

(30) Priorité: 02.02.2016 FR 1670022
(43) Date de publication de la demande: 12.12.2018
(73) Titulaire: Coriolis Group, 56530 Quéven (FR)
(72) Inventeur: TREIBER Johannes, 89415 Lauingen (DE); VEENSTRA Simon, 3781 BA Voorthuizen (NL); HAMLYN Alexander, 56270 Ploemeur (FR)
(86) Numéro de dépôt international: PCT/FR2017/000016
(87) Numéro de publication internationale: WO 2017/134355

(56) Documents cités:
- WO-A1-2014/064085
- WO-A1-2014/100127
- WO-A1-2015/170017

## Description

La présente invention concerne un procédé de réalisation de préformes tridimensionnelles en matériau composite.

Il est connu des procédés de réalisation d'une préforme tridimensionnelle comprenant la réalisation d'une préforme initiale formée de plusieurs plis de fibres superposés, et le formage de la préforme initiale entre l'outillage de formage mâle et l'outillage de formage femelle d'une presse pour obtenir une préforme tridimensionnelle avec sa forme finale souhaitée. La préforme tridimensionnelle est ensuite utilisée pour former une pièce en matériau composite.

La préforme initiale peut être réalisée à partir de fibres unidirectionnelles tissées ou non tissées, pré-imprégnées d'un polymère thermoplastique ou thermodurcissable. Dans ce cas, le formage est classiquement effectué à chaud, afin d'augmenter la formabilité de la préforme initiale. Lors du formage, plusieurs mécanismes de déformation ou déplacement interviennent, notamment des mécanismes de friction inter-plis, des mécanismes de cisaillement intra-pli, et des mécanismes de flexion.

Suivant la forme de la préforme finale, notamment en cas de préforme de forme complexe, par exemple à double courbure, les fibres ont tendance à se plisser. Pour limiter les défauts lors du formage, notamment ces plissements de fibres, il a été proposé de maintenir la préforme initiale sous tension lors du formage, au moyen de pinces disposées autour de la préforme initiale, et venant pincer la préforme initiale sur sa périphérie.

Le document WO2015/170017 décrit la réalisation par placement de fibres d'une préforme formée d'une superposition de plis de fibres unidirectionnelles, et le formage de ladite préforme entre deux outillages de formage. Pour limiter les phénomènes de plissement lors du formage, des plis sont réalisés dans une même orientation avec un recouvrement partiel, de sorte que lors du formage les fibres desdits plis se déplacent les unes par rapport aux autres. Pour contrôler ce déplacement relatif, un cadre est utilisé pour pincer et bloquer l'ensemble des plis de la préforme sur son pourtour.

Le document WO2014/064085 décrit un procédé de moulage de matériau composite dans lequel un tissu de fibres, formé de plusieurs pièces de tissu assemblées, est tendu dans un cadre de maintien pour éviter de former un pli dans le tissu lors de la mise en place du tissu dans un moule. Le tissu de fibres comporte des languettes de maintien temporaires, formées de pièces de tissu rapportées, qui s'étendent à partir de la périphérie dudit tissu de fibres et qui sont reliées à des attaches du cadre.

Le but de la présente invention est de proposer une solution visant à limiter les défauts dans les préformes tridimensionnelles de formes complexes.

A cet effet, la présente invention propose un procédé de réalisation d'une préforme tridimensionnelle comprenant la réalisation d'une préforme initiale comprenant plusieurs plis de fibres superposés, et le formage de la préforme initiale entre l'outillage de formage mâle et l'outillage de formage femelle d'une presse pour obtenir une préforme tridimensionnelle, caractérisé en ce que
la réalisation de la préforme initiale comprend la réalisation de plis superposés par application au contact, au moyen d'un rouleau d'application ou de compactage, de fibres continues unidirectionnelles sur un outillage de drapage, chaque pli étant réalisé par application d'une ou plusieurs bandes selon une orientation sur l'outillage de drapage ou sur des bandes du pli précédent, chaque bande étant formée d'une ou plusieurs fibres,
un ou plusieurs plis comprenant des fibres qui présentent des sur-longueurs, s'étendant au-delà du contour d'ingénierie, lesdites sur-longueurs constituant des portions de serrage ou préhension, lesdites portions de serrage étant formées de fibres provenant d'un nombre de plis inférieur au nombre de pli total de la préforme initiale,
lesdites portions de serrage étant placées dans des moyens de serrage d'un système de tension de manière à appliquer de manière sélective de la tension dans lesdites fibres qui forment lesdites portions de serrage lors de l'opération de formage,
lesdites portions de serrage étant définies de sorte que des fibres sont mises sous tension par leurs deux extrémités lors du formage et/ou des fibres sont mises sous tension par une seule de leurs extrémités lors du formage.

Selon l'invention, il est prévu lors de la réalisation de la préforme initiale de former, pour des fibres particulières de plis particuliers, des sur-longueurs qui forment des portions de serrage pour appliquer de la tension dans lesdites fibres lors du formage. La tension est appliquée de manière sélective sur des fibres, de manière à favoriser l'un des mécanismes de déformation de fibres apparaissant lors du formage de fibres unidirectionnelles. Lors du formage, les mécanismes de déformation, appelés également mécanismes de déplacement, comprennent notamment des mécanismes de friction inter-plis, appelés également mécanismes de cisaillement inter-plis, des mécanismes de cisaillement intra-pli qui incluent des cisaillements dans la section des fibres et des cisaillements dans la longueur des fibres, et des mécanismes de flexion. Par rapport aux préformes de l'art antérieur, les sur-longueurs selon l'invention s'étendent au-delà du contour de fabrication d'une performe réalisée selon un procédé de l'art antérieur.

Les fibres de plis qui seront maintenues sous tension lors du formage sont définies par expérience, et/ou en utilisant un logiciel de simulation de formage, permettant de simuler l'opération de formage et d'identifier les zones de déformation de fibres, éventuellement en fonction de la tension appliquée de manière sélective sur certaines fibres de certains plis.

Les moyens de serrage sont aptes à serrer ensemble ou individuellement les fibres d'une même portion de serrage.

Le procédé selon l'invention permet le formage de préformes tridimensionnelles de formes complexes, avec des fibres orientées, tout en limitant les phénomènes de plissements des fibres lors du formage. Le procédé selon l'invention peut avantageusement être utilisé pour la réalisation de pièce en matériau composite, notamment dans le domaine de l'automobile ou l'aéronautique.

La préforme initiale est réalisée par un procédé d'application au contact, classiquement appelé procédé de placement de fibres, dans lesquels les fibres continues sont déposées au contact sur l'outillage de drapage pour former plusieurs plis dans des orientations définies. Le placement de fibres est avantageusement automatisé au moyen d'une tête de placement de fibres, connue en soi, comportant un rouleau de compactage destiné à venir en contact contre l'outillage pour appliquer une bande formée d'une ou plusieurs fibres plates continues, et un système de guidage pour guider la ou les fibres sur ledit rouleau, par déplacement relatif de la tête d'application par rapport à la surface de drapage selon différentes trajectoires.

La préforme initiale peut être bidimensionnelle, obtenue par drapage sur la surface plane d'un outillage, ou tridimensionnelle, le formage pouvant alors être effectué pour obtenir des pièces tridimensionnelles de forme complexe ne pouvant être obtenues par drapage.

Les fibres continues unidirectionnelles sont appliquées par placement de fibres, ce qui permet de réaliser les sur-longueurs aisément tout en limitant les chutes. Les fibres sont par exemple des fibres de carbone, des fibres de verre ou des fibres synthétiques.

Lesdites fibres continues unidirectionnelles se présentent de préférence sous la forme de fibres continues unidirectionnelles plates, classiquement appelées mèches, comprenant une multitude de filaments. Les fibres présentent par exemple des largeurs 3,175 mm (1/8 de pouce), 6,35 mm (1/4 de pouce) ou 12,7 mm (1/2 pouce). Dans la présente, le terme «fibres » désigne également des fibres de plus grande largeur, supérieure à 12,7 mm (1/2 pouce), classiquement appelées bandes dans la technologie du placement. De préférence, les fibres ont une largeur inférieure ou égale à 12,7 mm (1/2 pouce). Les fibres déposées peuvent être des fibres sèches munies d'un liant, ou des fibres pré-imprégnées de polymère thermodurcissable ou thermoplastique.

Suivant la forme de la préforme tridimensionnelle souhaitée, le type de fibre utilisé, et les mécanismes de déformation que l'on souhaite favoriser :
- les portions de serrage sont formées de fibres d'un même pli ou de plis de même orientation, ou de plis d'orientation différentes, par exemple de deux plis orientés à 90° l'un de l'autre,
- les portions de serrage et les moyens de serrage sont définis de sorte que la tension appliquée par les moyens de serrage sur des fibres est parallèle à la direction desdites fibres, et/ou la tension appliquée par les moyens de serrage sur des fibres est non parallèle à la direction desdites fibres, par exemple à 45° de la direction des fibres.

Selon un mode de réalisation, la préforme initiale est réalisée à partir de fibres sèches munies d'un liant, et/ou de fibres pré-imprégnées d'un ou plusieurs polymères, dits d'imprégnation thermoplastique et/ou thermodurcissable.

Selon un premier mode de réalisation, le procédé selon l'invention est un procédé de réalisation de préformes tridimensionnelle sèches, comprenant moins de 10% en poids de liant, de préférence moins de 5% en poids de liant, ladite préforme sèche étant par la suite soumise à une opération d'imprégnation d'un polymère pour former une pièce composite. Les préformes sèches avec liant comprennent une faible quantité de liant, généralement inférieure à 5 %, permettant de maintenir la cohésion de la préforme, tout en autorisant son imprégnation ultérieure. Les préformes sèches sont obtenues par application de fibres sèches munies d'un liant et/ou par application de fibres sèches, sans liant, et application de liant, par exemple par pulvérisation d'un liant liquide et/ou la projection d'un liant sous forme de poudre, sur la surface d'application et/ou les fibres sèches préalablement drapées.

Selon un second mode de réalisation, le procédé est un procédé de réalisation de préformes de type pré-imprégnées, comprenant au moins 30% en poids d'un ou plusieurs polymères thermoplastiques et/ou thermodurcissables, dits d'imprégnation, de préférence au moins de 40% en poids, le ou lesdits polymères constituant la matrice de la pièce composite finale, la préforme pré-imprégnée pouvant par la suite être soumise à une opération de consolidation ou de cuisson.

Selon un mode de réalisation, le formage est réalisé à chaud, la préforme initiale étant chauffée avant et/ou pendant le formage afin de chauffer le liant et/ou le ou les polymères et ainsi augmenter la formabilité de la préforme. La préforme initiale peut être préchauffée avant le formage par passage dans un four et/ou la préforme peut être chauffée lors du formage par chauffage de l'outillage de formage mâle et/ou l'outillage de formage femelle. La préforme est de préférence chauffée à une température supérieure ou égale à la température de transition vitreuse du liant et/ou du ou des polymères.

Selon un mode de réalisation, le procédé comprend
- une étape de définition de zones dans lesquelles des fibres d'orientation donnée sont soumises à des déformations importantes lors du formage, de préférence via un logiciel de simulation de formage, et
- une étape de définition de trajectoires pour réaliser des sur-longueurs en fonction desdites zones, l'application de fibres étant réalisée à partir de cette définition de trajectoires.

Selon un mode de réalisation, lesdites portions de serrage sont placées dans des moyens de serrage, par exemple formés de pinces, montés de manière mobile sur un cadre support du système de tension par l'intermédiaire de moyens de mise sous tension, par exemple formés d'actionneurs de type vérin. Dans ce mode de réalisation, les fibres sont bloquées dans les moyens de serrage, la tension dans les fibres lors du formage est obtenue via des moyens de mise sous tension autorisant un déplacement des moyens de serrage.

Selon un autre mode de réalisation, lesdites portions de serrage sont placées dans des moyens de serrage montés de manière fixe sur un cadre support du système de tension, lesdits moyens de serrage autorisant un déplacement des fibres placées dans lesdits moyens de serrage. Dans ce mode de réalisation, la tension dans les fibres lors du formage est obtenue par friction des fibres dans les moyens de serrage.

Selon un mode de réalisation, ladite préforme tridimensionnelle est soumise à une opération de détourage pour enlever les sur-longueurs et obtenir une pièce en matériau composite. Dans le cas d'une préforme sèche, l'opération de détourage est avantageusement précédée d'une opération dite d'imprégnation d'un polymère, par injection ou infusion.

L'invention sera mieux comprise, et d'autres buts, détails, caractéristiques et avantages apparaîtront plus clairement au cours de la description explicative détaillée qui va suivre de modes de réalisation particuliers actuellement préférés de l'invention, en référence aux dessins schématiques annexés, sur lesquels :
- la figure 1 est une vue schématique en coupe d'un exemple de préforme tridimensionnelle réalisée selon le procédé selon l'invention ;
- la figure 2 est une vue schématique de côté illustrant l'opération de drapage de la préforme initiale ;
- la figure 3 est une vue de dessus d'une préforme initiale selon un premier mode de réalisation obtenue à l'issue de l'opération de drapage ;
- les figures 4 et 5 sont respectivement des vues de dessus d'un pli à 90° et d'un pli 0° de la préforme initiale de la figure 3 ;
- la figure 6 illustre la mise sous tension de la préforme initiale de la figure 3 ;
- les figures 7 et 8 sont des vues schématiques de la préforme initiale selon le plan de coupe VII-VII de la figure 3 lors de l'opération de formage ;
- la figure 9 est une vue de dessus d'une préforme initiale selon un deuxième mode de réalisation, et les figures 10A et 10B sont des vues schématiques de l'empilement de plis de ladite préforme respectivement selon les plans de coupe XA-XA et XB-XB de la figure 9;
- la figure 11 est une vue de dessus d'une préforme initiale selon un troisième mode de réalisation ;
- la figure 12 illustre la mise sous tension de la préforme initiale de la figure 11 ;
- la figure 13 est une vue de dessus d'une préforme initiale selon un quatrième mode de réalisation, montée sur un cadre support ; et,
- la figure 14 est une vue schématique de dessus d'un pli à 0° de la préforme de la figure 13.

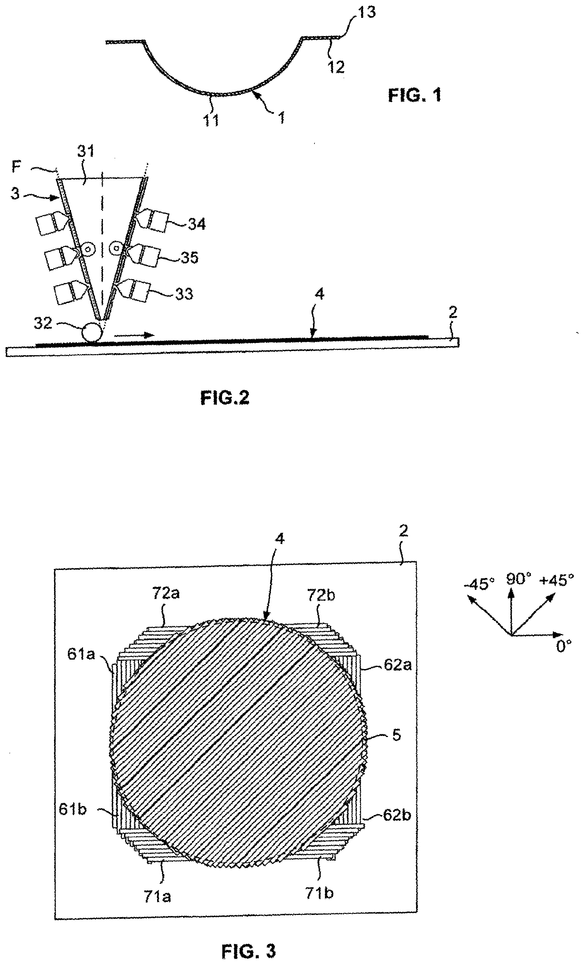

La figure 1 illustre un exemple de préforme 1 réalisable selon le procédé selon l'invention, par drapage de fibres continues et formage. La préforme présente la forme d'une calotte sphérique 11 avec un rebord annulaire 12.

Les figures 2 à 6 illustrent les étapes du procédé de réalisation de cette préforme tridimensionnelle 1.

Dans une première étape, des plis de fibres continues sont drapés à plat sur un outillage de drapage 2 dans des différentes orientations, pour former une plaque ou une préforme initiale 4 bidimensionnelle telle qu'illustrée à la figure 3. Le drapage est effectué au moyen d'une tête 3 de placement de fibres, connue en soi, permettant le drapage automatique au contact de bandes formées d'une ou plusieurs fibres. Les fibres F entrent dans la tête 3 sous la forme de deux nappes de fibres, et la tête comprend un système de guidage 31 permettant de guider les fibres vers le rouleau de compactage 32 sous la forme d'une bande de fibres dans laquelle les fibres sont disposées côte à côte, par exemple sensiblement bord à bord. La tête comprend, de part et d'autre du système de guidage, des moyens de coupe 33 pour couper individuellement chaque fibre passant dans le système de guidage, des moyens de blocage 34 pour bloquer chaque fibre venant d'être coupée, et des moyens de réacheminement 35 pour entraîner individuellement chaque fibre, ceci afin de pouvoir à tout moment stopper et reprendre l'application d'une fibre, ainsi que choisir la largeur de la bande. Le drapage d'une bande est réalisé par déplacement relatif de la tête par rapport à la surface de drapage sensiblement plane de l'outillage de drapage. La tête comprend par exemple une structure support (non représentée) sur laquelle est monté le système de guidage et par laquelle la tête peut être assemblée à un système de déplacement, apte à déplacer la tête selon au moins deux directions perpendiculaires l'une à l'autre. La tête est par exemple prévue pour recevoir huit fibres, et permettre l'application de bandes de 1 à 8 fibres de 6,35 mm (1/4 de pouce) de large.

A titre d'exemple, la tête est utilisée pour la réalisation d'une préforme, à partir de fibres pré-imprégnées d'un polymère thermoplastique. Les fibres sont par exemple par exemple des fibres de carbone, plates continues, de type mèches, comprenant une multitude de fils ou filaments de carbone, avec un polymère thermoplastique présent en quantité de l'ordre de 40% en poids.

La tête 3 est équipée d'un système de chauffage (non représenté), par exemple de type lampe IR ou laser, afin de chauffer le polymère en cours d'application des fibres, et ainsi permettre au moins une adhésion des fibres des différents plis et assurer la cohésion de l'ensemble de plis de la préforme. Le système de chauffage chauffe les fibres avant leur application sur la surface d'application, ainsi que la surface d'application ou les fibres préalablement déposées, en amont du rouleau par rapport à la direction d'avancement.

La figure 3 illustre une préforme bidimensionnelle initiale 4 bidimensionnelle réalisée en drapant sept plis de fibres dans des orientations différentes, selon l'empilement suivant : +45°/- 45°/0°/90°/0°/-45°/+45°. Chaque pli est ici formé de 7 bandes de 8 fibres. Le contour d'ingénierie 13 (Fig.1) de la préforme tridimensionnelle finale correspond au contour de la pièce tridimensionnelle obtenue après détourage. Le contour d'ingénierie de la préforme initiale est le contour théorique de la préforme initiale correspondant au contour d'ingénierie 13 de la préforme initiale avant formage et détourage. Ce contour d'ingénierie de la préforme initiale est représenté schématiquement par le cercle en trait discontinu référencé 5 sur la figure 3. Le contour de fabrication des plis de la préforme initiale correspond aux contours des plis réellement drapés, tel qu'illustré à la figure 3.

Selon l'invention, des fibres sélectionnées de plis sélectionnés présentent des sur-longueurs s'étendant au-delà du contour d'ingénierie 5 de la préforme initiale pour former des portions de serrage par lesquelles la préforme initiale sera maintenue sous tension pendant l'opération de formage.

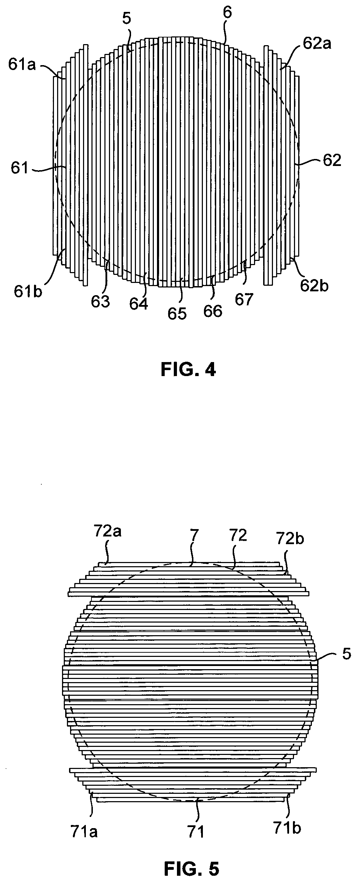

La figure 4 illustre le pli 6 orienté à 90°, de la préforme initiale, les fibres de la première bande 61 et de la dernière bande 62 de ce pli 6 présentent à chaque extrémité des sur-longueurs 61a, 61b, 62a, 62b qui s'étendent au-delà du contour d'ingénierie 5. Les extrémités des fibres des autres bandes 63-67 de ce pli 6 sont disposées juste au-delà du contour d'ingénierie. Le contour de fabrication de ce pli 6 présente ainsi une forme globalement circulaire crénelée, avec ses sur-longueurs 61a, 61b, 62a, 62b en saillie. Ces sur-longueurs sont également en créneaux afin de limiter les chutes de matière après détourage.

De même, en référence à la figure 5, les fibres des premières 71 bandes et des dernières bandes 72 des deux plis 7 orientés à 0° présentent à chaque extrémité des sur-longueurs 71a, 71b, 72a, 72b qui s'étendent au-delà du contour d'ingénierie. Les sur-longueurs 71a, 71b, 72a, 72b de ces bandes de plis 7 forment avec les sur-longueurs 61a, 61b, 62a, 62b du pli 6 des portions de serrage, les sur-longueurs du pli 6 venant s'intercaler entre les sur-longueurs des deux plis 7. Les extrémités des fibres des autres bandes de ce pli 7 sont disposées juste au-delà du contour d'ingénierie 5.

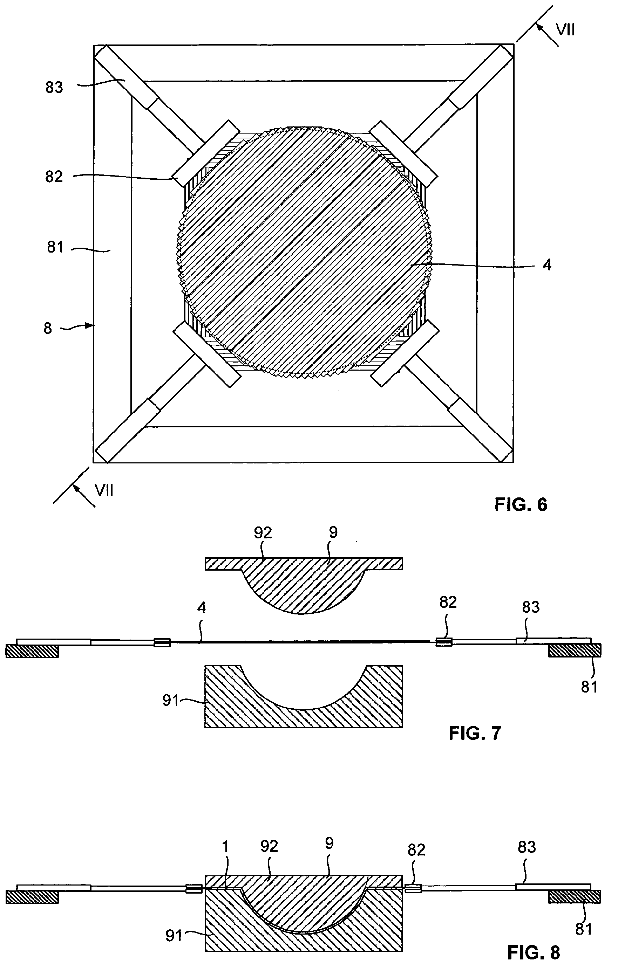

La préforme initiale 4 est démoulée de l'outillage de drapage 2 et est montée sur un cadre support 81 d'un système de tension 8 tel qu'illustré à la figure 6. Les portions de serrage sont placées dans des moyens de serrage 82 montés sur le cadre support 81 par l'intermédiaire de moyens de mise sous tension 83. Les moyens de serrage sont par exemple formés de pinces, chaque portion de serrage étant positionnée entre les deux mâchoires d'une pince. Les moyens de mise sous tension comprennent par exemple des actionneurs de type vérin, le corps de chaque vérin étant assemblé au cadre support tandis que la pince associée est assemblée à l'extrémité de la tige de vérin.

Dans ce mode de réalisation, le cadre support porte ici quatre pinces 82 pour serrer les quatre portions de serrage formées par les sur-longueurs 61a-72a, 62a-72b, 61b-71a, et 71b- 62b. La préforme est ainsi maintenue sur le cadre uniquement par les extrémités des fibres des premières bandes et dernières bandes des plis à 0° et 90° qui constituent les portions de serrage. Les portions de serrage sont bloquées en position dans les pinces. La préforme initiale montée sur le cadre support est ensuite transférée vers une presse pour l'opération de formage, également appelée opération d'emboutissage.

Tel qu'illustré à la figure 7, la presse 9 comprend un outillage de formage femelle 91 ou matrice, présentant un renfoncement dont la forme correspondant à celle de la calotte sphérique 12 de la préforme à réaliser, et un outillage de formage mâle 92, ou poinçon, comprenant un bossage de forme complémentaire. Le formage est réalisé par rapprochement relatif de l'outillage de formage mâle et de l'outillage de formage femelle, d'une position ouverte de la presse illustrée à la figure 7, vers une position fermée de la presse illustrée à la figure 8. Le formage est réalisé à chaud, par chauffage des deux outillages 91, 92, afin de porter le polymère de la préforme au moins à sa température de fusion.

Lors du formage, seules les fibres des premières et deuxièmes bandes des plis à 0° et 90° sont maintenues sous tension. La force de tension induite dans les fibres est ici à 45° de la direction des fibres. Cette mise sous tension sélective de certaines fibres de certains plis permet ici de favoriser les mécanismes de cisaillement inter-plis au niveau desdites fibres mises sous tension, à savoir entre les fibres appartenant au pli 90° et les fibres adjacentes des plis à 0°, et entre les fibres appartenant aux plis 0° et les fibres adjacentes des plis à -45°. Cette mise sous tension sélective de fibres permet de limiter, voire supprimer, les plissements classiquement générés lors du formage par les fibres des bandes extérieures des plis à 0° et 90° au niveau de la zone de jonction entre la calotte sphérique 12 et le rebord annulaire 11.

Après refroidissement, les outillages 91, 92 sont ensuite écartés l'un de l'autre en position ouverte pour pouvoir démouler la préforme tridimensionnelle de la presse. Après formage, la préforme est classiquement soumise à une opération de détourage pour supprimer notamment les sur-longueurs, et obtenir une pièce finale en matériau composite, le détourage étant effectué après avoir démoulé la préforme de la presse ou lorsque la préforme est positionnée sur l'un des outillages de la presse. Le détourage est par exemple effectué par une opération de découpe par ultrason.

Avantageusement, avant le positionnement de la préforme initiale entre les deux outillages de formage, la préforme est soumise à une opération de préchauffage, afin de chauffer la préforme avant l'opération de formage, et ainsi d'optimiser l'opération de formage. Ce préchauffage est par exemple réalisé par passage de la préforme initiale entre les rampes de lampe infrarouge supérieure et inférieure d'un four ou tunnel de préchauffage. Selon une variante de réalisation, la tête est utilisée pour la réalisation d'une préforme sèche, à partir de fibres sèches munies d'un liant classiquement appelé « binder », pour conférer un caractère collant aux fibres lors du drapage. Le liant est sous forme de poudre et/ou d'un ou plusieurs voiles. Les fibres sont par exemple des fibres de carbone, plates continues, de type mèches, comprenant une multitude de fils ou filaments de carbone, avec un liant thermoplastique sous forme de poudre, présent en quantité de l'ordre de 2% en poids. La préforme initiale résultante, avec les sur-longueurs précitées, est montée sur un cadre support et soumise à une opération de formage. Avant le formage, la préforme est avantageusement préchauffée dans un tunnel, le formage pouvant être effectué sans chauffage des outillages, ce qui simplifie le système de formage. Après formage, la préforme tridimensionnelle est ensuite soumise à une opération d'ajout de polymère par injection et/ou infusion pour obtenir une pièce en matériau composite utilisable.

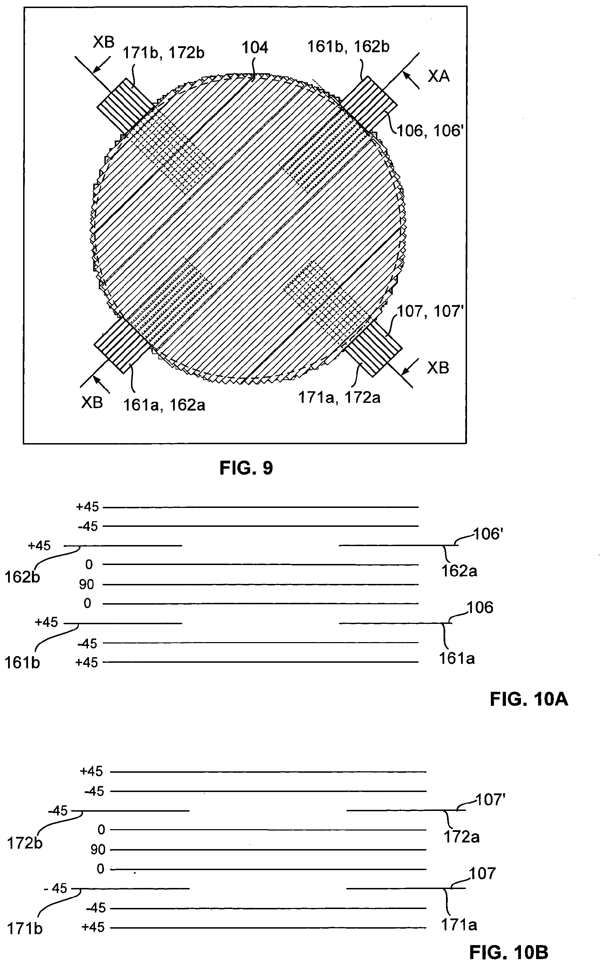

Les figures 9, 10A et 10B illustrent un deuxième mode de réalisation de réalisation d'une préforme initiale 104 pour former la préforme tridimensionnelle de la figure 1. La préforme initiale 104 comprend un empilement de sept plis de mêmes orientations que ceux décrits précédemment, mais sans sur-longueurs, les sur-longueurs de la préforme étant réalisées avec des plis intermédiaires 106, 106', 107, 107' disposés entre les plis à 0° et -45°.

Après drapage du premier pli à +45° et du second pli à -45°, le troisième pli consiste en un pli intermédiaire 106 orienté à +45°, drapé sur le second pli. Ce pli intermédiaire 106 est formé d'une seule bande de 8 fibres comprenant deux segments. Ces deux segments de bande sont drapés en une seule trajectoire de la tête, à la volée, en coupant et bloquant les fibres via les moyens de coupe et les moyens de blocage de la tête de placement pour former le premier segment, et en débloquant les fibres et en les réacheminant pour former le deuxième segment. Chaque segment s'étend au-delà du contour d'ingénierie 5 pour former des sur-longueurs 161a, 161b. La bande passe par le centre du cercle qui définit le contour d'ingénierie 5, de sorte que les deux sur-longueurs sont diamétralement opposées. Un quatrième pli consiste en un pli intermédiaire 107 orienté à -45°, drapé sur le second pli. Ce pli intermédiaire 107 est formé d'une seule bande de 8 fibres comprenant deux segments. Ces deux segments de bande sont drapés en une seule trajectoire de la tête passant par le centre du cercle définissant le contour d'ingénierie, et chaque segment s'étend au-delà du contour d'ingénierie 5 pour former des sur-longueurs 171a, 171b disposées symétriquement de part et d'autre dudit centre du cercle. Après drapage des trois plis suivant orientés à 0°, 90° et 0°, un huitième pli consistant en un pli intermédiaire 106' orienté à +45° est drapé, ce pli intermédiaire 106' est identique au pli intermédiaire 106 et présente des sur-longueurs 162a, 162b se superposant à celles 161a, 161b du pli intermédiaire 106, et forment avec ces dernières des portions de serrage. Un neuvième pli consistant en un pli intermédiaire 107' orienté à -45° est drapé, ce pli intermédiaire 106' est identique au pli intermédiaire 106 et présente des sur-longueurs 162a, 162b se superposant à celles 161a, 161b du pli intermédiaire 106 et forment avec ces dernières des portions de serrage.

Comme précédemment, la préforme est ensuite montée sur un cadre support en plaçant les quatre portions de serrage dans les pinces du cadre, de manière à maintenir sous tension lors du formage les fibres formant lesdites portions de serrage. La force de tension est ici parallèle à la direction des fibres pincées. Dans ce mode de réalisation, la mise sous tension sélective de fibres lors du formage permet de limiter les phénomènes de plissements décrits précédemment.

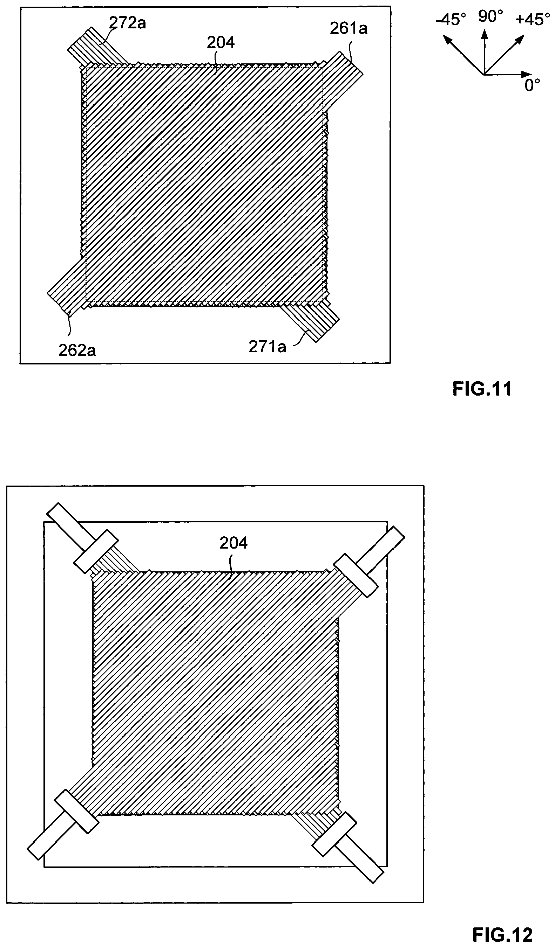

La figure 11 illustre un autre exemple de préforme initiale 204 munie de sur-longueurs, adaptée pour la réalisation par formage d'une préforme tridimensionnelle. La préforme comprend comme précédemment un empilement de sept plis +45°/-45°/0°/90°/0°/- 45°/+45°. La préforme comprend un contour de fabrication sensiblement rectangulaire avec au niveau des quatre coins des sur-longueurs formant des portions de serrage. A deux coins opposés, chaque portion de serrage est formée par les sur-longueurs 261a, 262a superposées de deux bandes provenant des deux plis à +45°, les sur-longueurs à chaque coin étant formées à partir de fibres de bandes différentes de sorte que, lors du formage, la tension n'est appliquée qu'à une seule extrémité des fibres. De même, aux deux autres coins opposés, les deux portions de serrage sont chacune formées par les sur-longueurs 271a, 272a de deux bandes provenant des deux plis à -45°, les sur-longueurs à chaque coin étant également formées à partir de fibres de bandes différentes. La figure 12 illustre de manière schématique le montage de cette préforme 204 sur un cadre support au moyen de pinces montées sur le cadre support via des vérins En variante, les pinces sont montées fixes sur le cadre support, les portions de serrage étant bloquées en position dans les pinces.

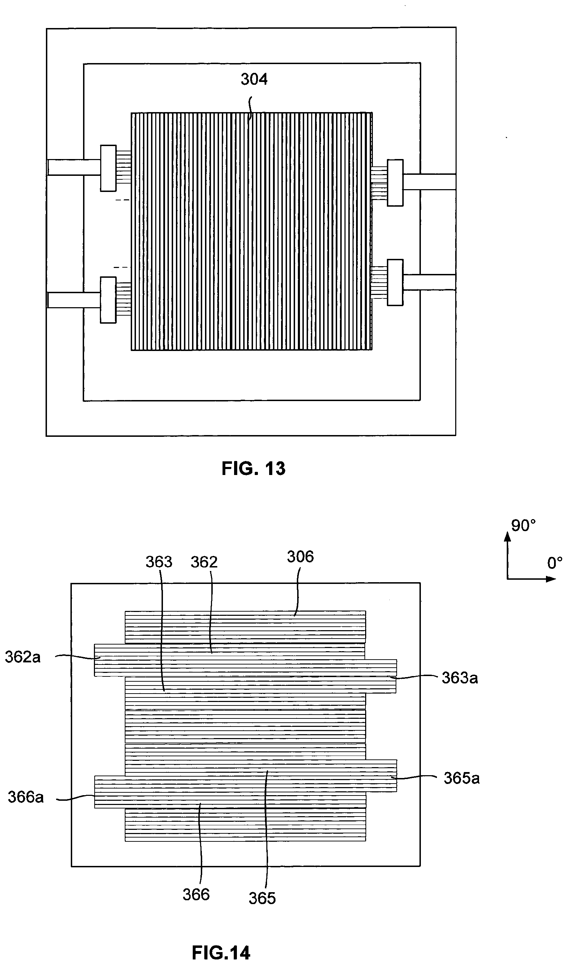

La figure 13 illustre un autre exemple de préforme initiale 304 montée sur un cadre support pour la réalisation par formage d'une préforme tridimensionnelle. La préforme initiale est formée ici d'un empilement de sept plis 90°/0°/90°/0°/90°/0°/90°. La préforme comprend un contour de fabrication sensiblement rectangulaire, et présente quatre portions de serrage formées chacune à partir de sur-longueurs de fibres des trois plis à 0°. La préforme présente deux portions de serrage sur deux côtés opposés, deux portions de serrage de côtés différents étant formés à partir de mêmes fibres et de fibres différentes, de sorte que lors de la mise sous tension, certaines fibres sont mises sous tension par leur deux extrémités, et d'autres fibres uniquement par une seule extrémité.

En référence à la figure 14, chaque pli 306 orienté à 0° est formé de sept bandes parallèles de huit fibres chacune. D'un côté de la préforme, une première sur-longueur 362a et une deuxième sur-longueur 366a sont formées respectivement par les huit fibres de la deuxième bande 362 et les huit fibres de la sixième bande 366. De l'autre côté de la préforme, une quatrième sur-longueur 363a est formée par quatre fibres de la deuxième bande 362 et les quatre fibres adjacentes de la troisième bande 363, et une cinquième sur-longueur 365a est formée par quatre fibres de la cinquième bande 365 et quatre fibres de la sixième bande 366. Chaque pli à 0° présente quatre sur-longueurs identiques qui se superposent pour former les quatre portions de serrage.

Bien que l'invention ait été décrite en liaison avec différents modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention telle que définie par l'étendue de la protection des revendications.

## Revendications

1. Procédé de réalisation d'une préforme (1) tridimensionnelle comprenant
- la réalisation d'une préforme initiale (4, 104, 204, 304) comprenant plusieurs plis de fibres superposés, et
- le formage de la préforme initiale entre l'outillage de formage mâle (92) et l'outillage de formage femelle (91) d'une presse (9) pour obtenir une préforme tridimensionnelle,
la réalisation de la préforme initiale comprend la réalisation de plis superposés par application au contact, au moyen d'un rouleau d'application (32), de fibres continues unidirectionnelles sur un outillage de drapage (2), chaque pli étant réalisé par application d'une ou plusieurs bandes selon une orientation sur l'outillage de drapage ou sur des bandes du pli précédent, chaque bande étant formée d'une ou plusieurs fibres,
un ou plusieurs plis (6, 7) comprenant des fibres qui présentent des sur-longueurs (61a, 61b, 62a, 62b, 71a, 71b, 72a, 72b) s'étendant au-delà du contour d'ingénierie de la préforme initiale, lesdites sur-longueurs constituant des portions de serrage,
lesdites portions de serrage étant placées dans des moyens de serrage (82) d'un système de tension (8) de manière à appliquer de manière sélective de la tension dans lesdites fibres lors de l'opération de formage,
lesdites portions de serrage étant formées de fibres provenant d'un nombre de plis inférieur au nombre de pli total de la préforme initiale, et étant définies de sorte que des fibres sont mises sous tension par leurs deux extrémités lors du formage et/ou des fibres sont mises sous tension par une seule de leurs extrémités lors du formage.

2. Procédé selon la revendication 1, **caractérisé en ce que** la préforme initiale est réalisée à partir de fibres sèches munies d'un liant, et/ou de fibres pré-imprégnées d'un ou plusieurs polymères.

3. Procédé selon la revendication 2, **caractérisé en ce que** le formage est réalisé à chaud, la préforme initiale étant chauffée avant et/ou pendant le formage.

4. Procédé selon l'une des revendications 1 à 3, **caractérisé en ce qu'**il comprend
- une étape de définition de zones dans lesquelles des fibres d'orientation donnée sont soumises à des déformations importantes lors du formage, et
- une étape de définition de trajectoires pour réaliser des sur-longueurs en fonction desdites zones.

5. Procédé selon l'une des revendications 1 à 4, **caractérisé en ce que** lesdites portions de serrage sont placées dans des moyens de serrage (82) montés de manière mobile sur un cadre support (81) du système de tension (8) par l'intermédiaire de moyens de mise sous tension (83).

6. Procédé selon l'une des revendications 1 à 4, **caractérisé en ce que** lesdites portions de serrage sont placées dans des moyens de serrage montés de manière fixe sur un cadre support du système de tension, lesdits moyens de serrage autorisant un déplacement des fibres placées dans lesdits moyens de serrage.

7. Procédé selon l'une des revendications 1 à 6, **caractérisé en ce que** ladite préforme tridimensionnelle est soumise à une opération de détourage pour obtenir une pièce en matériau composite.

## Patentansprüche

1. Verfahren zur Herstellung eines dreidimensionalen Vorformlings (1), umfassend
- das Herstellen eines Ausgangs-Vorformlings (4, 104, 204, 304), der mehrere Lagen übereinanderliegender Fasern umfasst, und
- das Formen des Ausgangs-Vorformlings zwischen dem männlichen Formungswerkzeug (92) und dem weiblichen Formungswerkzeug (91) einer Presse (9), um einen dreidimensionalen Vorformling zu erhalten,
wobei die Herstellung des Ausgangs-Vorformlings die Herstellung von übereinanderliegenden Lagen durch Kontaktauftragen, mittels einer Auftragwalze (32), von eindirektionalen kontinuierlichen Fasern auf ein Auflagewerkzeug (2) umfasst, wobei jede Lage durch Auftragen von einem oder mehreren Bändern gemäß einer Ausrichtung auf das Auflagewerkzeug oder auf Bänder der vorhergehenden Lage hergestellt wird, wobei jedes Band aus einer oder mehreren Fasern gebildet ist,
wobei eine oder mehrere Lagen (6, 7) Fasern umfassen, die Überlängen (61a, 61b, 62a, 62b, 71a, 71b, 72a, 72b) aufweisen, die sich über die technische Kontur des Ausgangs-Vorformlings hinaus erstrecken, wobei die Überlängen Spannabschnitte darstellen,
wobei die Spannabschnitte in Spannmittel (82) eines Spannungssystems (8) derart platziert werden, dass beim Formungsvorgang selektiv Spannung auf die Fasern angewendet wird,
wobei die Spannabschnitte von Fasern gebildet sind, die von einer Anzahl von Lagen stammen, die kleiner als die Anzahl insgesamt von Lagen des Ausgangs-Vorformlings ist und derart definiert sind, dass Fasern durch ihre zwei Enden beim Formen unter Spannung gesetzt werden und/oder Fasern durch ein einziges ihrer Enden beim Formen unter Spannung gesetzt werden.

2. Verfahren nach Anspruch 1, **dadurch gekennzeichnet, dass** der Ausgangs-Vorformling aus trockenen Fasern hergestellt wird, die mit einem Bindemittel ausgestattet sind, und/oder aus mit einem oder mehreren Polymeren vorimprägnierten Fasern.

3. Verfahren nach Anspruch 2, **dadurch gekennzeichnet, dass** das Formen warm durchgeführt wird, wobei der Ausgangs-Vorformling vor und/oder während des Formens erwärmt wird.

4. Verfahren nach einem der Ansprüche 1 bis 3, **dadurch gekennzeichnet, dass** es umfasst
- einen Definitionsschritt von Zonen, in denen Fasern einer bestimmten Ausrichtung beim Formen erheblichen Verformungen ausgesetzt werden, und
- einen Definitionsschritt von Bahnen zur Herstellung der Überlängen in Abhängigkeit von den Zonen.

5. Verfahren nach einem der Ansprüche 1 bis 4, **dadurch gekennzeichnet, dass** die Spannabschnitte in Spannmittel (82) platziert werden, die auf einem Tragrahmen (81) des Spannungssystems (8) über Mittel zum Inspannungversetzen (83) beweglich angebracht sind.

6. Verfahren nach einem der Ansprüche 1 bis 4, **dadurch gekennzeichnet, dass** die Spannabschnitte in Spannmittel platziert werden, die auf einem Tragrahmen des Spannungssystems fest angebracht sind, wobei die Spannmittel eine Verlagerung der in den Spannmitteln platzierten Fasern erlauben.

7. Verfahren nach einem der Ansprüche 1 bis 6, **dadurch gekennzeichnet, dass** der dreidimensionale Vorformling einer Konturenbearbeitung ausgesetzt wird, um ein Teil aus Verbundmaterial zu erhalten.

## Claims

1. Method for producing a three-dimensional preform (1) comprising
- producing an initial preform (4, 104, 204, 304) comprising a plurality of superimposed fibre plies, and
- forming the initial preform between the male forming tool (92) and the female forming tool (91) of a press (9) to obtain a three-dimensional preform,
the production of the initial preform comprises producing superimposed plies by contact application, by means of an application roller (32), of unidirectional continuous fibres on a lay-up tool (2), each ply being produced by applying one or more strips along an orientation on the lay-up tool or on strips of the previous ply, each strip being formed of one or more fibres,
one or more plies (6, 7) comprising fibres which have excess lengths (61a, 61b, 62a, 62b, 71a, 71b, 72a, 72b) extending beyond the engineering contour of the initial preform, said excess lengths constituting gripping portions,
said gripping portions being placed in gripping means (82) of a tensioning system (8) so as to selectively apply tension in said fibres during the forming operation,
said gripping portions being formed of fibres coming from a number of plies that is smaller than the total number of plies of the initial preform, and being defined such that fibres are tensioned at both their ends during forming and/or fibres are tensioned at only one of their ends during forming.

2. Method according to claim 1, **characterized in that** the initial preform is produced from dry fibres provided with a binder, and/or fibres pre-impregnated with one or more polymers.

3. Method according to claim 2, **characterized in that** the forming is carried out under heat, the initial preform being heated before and/or during the forming.

4. Method according to one of claims 1 to 3, **characterised in that** it comprises
- a step of defining areas in which fibres of a given orientation are subjected to significant deformations during forming, and
- a step of defining trajectories for producing excess lengths according to the said areas.

5. Method according to one of claims 1 to 4, **characterized in that** said gripping portions are placed in gripping means (82) movably mounted on a support frame (81) of the tensioning system (8) via tensioning means (83).

6. Method according to one of claims 1 to 4, **characterized in that** said gripping portions are placed in gripping means fixedly mounted on a support frame of the tensioning system, said gripping means allowing a displacement of the fibres placed in said gripping means.

7. Method according to one of claims 1 to 6, **characterized in that** said three-dimensional preform is subjected to a trimming operation to obtain a composite material part.
